# EUROPEAN PATENT APPLICATION

(11) **EP 3 680 155 A1**
(43) Date of publication of application: **15.07.2020**
(21) Application number: 19151446.2
(22) Date of filing: 11.01.2019
(51) Int. Cl.: B62D 63/06, B60P 1/00, B60P 3/00

(54) **A CARGO SYSTEM, A RORO-VEHICLE WITH A CARGO SYSTEM AND A METHOD FOR ARRANGING CARGO ON A RORO-VEHICLE**

(71) Applicant: Wallenius Wilhelmsen Ocean AS, 1324 Lysaker (NO)
(72) Inventor: BREE, Henning, 27607 Geestland (DE); STEINHORST, Harald, 28197 Bremen (DE)
(74) Representative: Onsagers AS

(57) **Abstract**

A cargo system (17) for a roro-vehicle (10) for transport of cargo on a sea-going vessel is disclosed. The roro-vehicle (10) comprises a cargo deck (12) with a first end portion (14) and a second end portion (15) in a longitudinal direction of the roro-vehicle (10). The cargo system (17) comprises a first end support structure (34) that is adapted to be securely and disconnectably attached to the cargo deck (12) of the roro-vehicle (10) at the first end portion (14) of the cargo deck (12); a second end support structure (36) that is adapted to be securely and disconnectably attached to the cargo deck (12) of the roro-vehicle (10) at the second end portion (15), and/or an intermediate support structure (53) that is adapted to be securely and disconnectably attached to an intermediate portion (16) of the cargo deck (12) of the roro-vehicle (10); and either a full-length upper deck (18) where the full-length upper deck (18) is supported on and adapted to be securely and disconnectably attached to the first end support structure (34) and the second end support structure (36), or at least one intermediate-length upper deck (24, 29) that is adapted to be supported on and be securely and disconnectably attached to the intermediate support structure (53) and to the first end support structure (34) and/or the second end support structure (36), wherein the first end support structure (34) and the second end support structure (36) are capable of supporting the full-length upper deck (18) loaded with cargo. A roro-vehicle (10) comprising a cargo system (17) and a method for arranging cargo on a roro-vehicle (10) are also disclosed.

## Description

The present invention is related to a roro-vehicle for transport of cargo on ships where the cargo is stored on the roro-vehicle which is transferred to a ship and then transported to the desired destination together with the cargo where the roro-vehicle is transferred back onshore with the cargo still arranged on the roro-vehicle.

As an alternative to using containers that are lifted on and off cargo ships by cranes, cargo can be transported by cargo ships using roro-vehicles (roro - roll-on/roll-off). A roro-vehicle is a vehicle that has a deck on which the cargo is stored during transport. Roro-vehicles are further provided with wheels and connecting means so that they can be attached to a towing vehicle. The roro-vehicles therefore acts like a trailer and towing vehicles are used to transport roro-vehicles around onshore and on and off cargo ships.

A typical roro main cargo hold height in cargo ships ranges between 5m and 7,2m. A lot of cargo does not require all the available space above the deck of the roro-vehicle but at the same time the roro-vehicle cannot be shifted to another deck which could increase space utilization due to operational restrictions such as unfavourable inclination angles within the cargo ship to drive up or down to a different deck in the cargo ship or simply different weight restrictions of other decks than the main deck in the cargo ship. Existing roro-vehicles for transport of cargo on cargo ships is therefore often incapable of utilizing the potential space/room available for cargo.

The objective of the present invention has therefore been to develop a roro-vehicle that can better utilize the volume capacity of the cargo ships that carry roro-vehicles.

A further objective of the present invention has been to develop a roro-vehicle that can quickly be adapted to carry cargo of various shapes and sizes.

Another objective of the present invention has been to ensure easy access to the cargo space of the roro-vehicle so that cargo can be loaded onto and unloaded from the roro-vehicle in a quick and efficient manner.

Another objective of the present invention has been to obtain a roro-vehicle that is robust and capable of being moved with all cargo floors fully built-up and laden.

Another objective of the present invention has been to obtain a roro-vehicle that is capable of utilizing all available cargo space in cargo ships, especially cargo ships that are purpose built for roro-vehicles.

Another objective of the present invention has been to obtain a roro-vehicle that does not need any additional handling on the cargo ship.

It has also been an objective of the present invention to develop a new roro-vehicle where as much as possible of already existing equipment can be re-used.

These objectives are achieved with cargo system as defined in claim 1, a roro-vehicle as defined in claim 9 and a method for arranging cargo on a roro-vehicle as defined in claim 13. Further embodiments of the roro-vehicle are defined in the dependent claims.

Since existing solutions for transport of cargo with roro-vehicles is not satisfactory due to height and weight restrictions as well as limited flexibility when it comes to re-using existing equipment, a solution has been developed that is much more flexible and can handle a wide variety of cargo. The roro-vehicle according the present invention is formed as a double decker that is provided with a lower deck and an upper deck that can be adapted to cover the same cargo area as the lower deck or a cargo area that is smaller than the cargo area of the lower deck, for example half the area of the lower deck. The roro-vehicle according to the present invention may therefore be assembled for example as:
- a half double-decker which leaves the possibility to store higher/taller components on one part of the roll trailer, i.e. the roro-vehicle,
- a full double-decker where the upper deck is formed by two deck sections for where for deck section has an area that is half the area of the lower deck, i.e. the cargo deck of the roro-vehicle.
- a full-flat double-decker configuration where the upper deck is formed with a full-length single deck section that has an area that is the same as the area of the lower deck, i.e. the cargo deck of the roro-vehicle.

The upper section, i.e. the upper deck or decks, provide full weight capacity even for slightly unevenly distributed cargo weight.

With the present roro-vehicle, a flexible solution is therefore obtained that can adjust to height requirements of cargo on the lower deck of the roro-vehicle (half-double decker or full double decker) and basically doubles the available cargo space on a roro-vessel and the potential revenues.

Hence, there is provided a cargo system for a roro-vehicle for transport of cargo on a sea-going vessel where the roro-vehicle comprises a cargo deck with a first end portion and a second end portion in a longitudinal direction of the roro-vehicle, where the cargo system comprises:
- a first end support structure that is adapted to be securely and disconnectably attached to the cargo deck of the roro-vehicle at the first end portion of the cargo deck,
- a second end support structure that is adapted to be securely and disconnectably attached to the cargo deck of the roro-vehicle at the second end portion and/or an intermediate support structure that is adapted to be securely and disconnectably attached to an intermediate portion of the cargo deck of the roro-vehicle,
- either a full-length upper deck where the full-length upper deck is supported on and adapted to be securely and disconnectably attached to the first end support structure and the second end support structure, or
at least one intermediate-length upper deck that is adapted to be supported on and be securely and disconnectably attached to the intermediate support structure and to the first end support structure and/or the second end support structure,
and where the first end support structure and the second end support structure are capable of supporting the full-length upper deck loaded with cargo.

A cargo system is thereby obtained that can be adapted to the cargo that is to be transported simply by choosing the length of the upper deck according to the size and shape of the cargo, i.e. a full-length upper deck or one or more intermediate-length upper decks that will extend only along a portion of the lower deck of the roro-vehicle on which the cargo system is mounted.

For example, a cargo system may be provided, for a roro-vehicle for transport of cargo on a sea-going vessel where the roro-vehicle comprises a cargo deck with a first end portion and a second end portion in a longitudinal direction of the roro-vehicle, where the cargo system comprises:
- a first end support structure that is adapted to be securely and disconnectably attached to the cargo deck of the roro-vehicle at the first end portion of the cargo deck,
- a second end support structure that is adapted to be securely and disconnectably attached to the cargo deck of the roro-vehicle at the second end portion,
- a full-length upper deck that is adapted to be supported on and be securely and disconnectably attached to the first end support structure and the second end support structure,
and where the first support structure and the second support structure are capable of supporting a full-length upper deck loaded including cargo during transport of the roro-vehicle.

It should be noted that this configuration of the cargo system does not include any intermediate support of the upper deck between the first support structure and the second support structure. The first support structure and the second support structure are therefore designed to be capable of supporting both the weight of the full-length upper deck and the weight of the cargo attached to the full-length upper deck and further to be capable of supporting the full-length configuration of the cargo system when it is subjected to external forces and loads due to motions of the vessel during transport.

Alternatively, a cargo system may be provided, for a roro-vehicle for transport of cargo on a sea-going vessel where the roro-vehicle comprises a cargo deck with a first end portion and a second end portion in a longitudinal direction of the roro-vehicle, where the cargo system comprises:
- a first end support structure that is adapted to be securely and disconnectably attached to the cargo deck of the roro-vehicle at the first end portion of the cargo deck or a second end support structure that is adapted to be securely and disconnectably attached to the cargo deck of the roro-vehicle at the second end portion,
- an intermediate support structure that is adapted to be securely and disconnectably attached to an intermediate portion of the cargo deck of the roro-vehicle,
- at least a first intermediate upper deck that is adapted to be supported on and be securely and disconnectably attached to the first end support structure and an intermediate support structure or a second intermediate upper deck that is adapted to be supported on and be securely and disconnectably attached to the second end support structure and the intermediate support structure,
wherein the first support structure and the second support structure are capable of supporting a full-length upper deck loaded including cargo.

It should be noted that in this configuration of the cargo system, including one intermediate-length upper deck, the first support structure and the second support structure are the same as for the full-length upper deck configuration of the cargo system and are therefore designed to be capable of supporting both the weight of the full-length upper deck and the weight of the cargo attached to the full-length upper deck and further to be capable of supporting the full-length configuration of the cargo system when it is subjected to external forces and loads due to motions of the vessel during transport.

Alternatively, a cargo system may be provided, for a roro-vehicle for transport of cargo on a sea-going vessel where the roro-vehicle comprises a cargo deck with a first end portion and a second end portion in a longitudinal direction of the roro-vehicle, where the cargo system comprises:
- a first end support structure that is adapted to be securely and disconnectably attached to the cargo deck of the roro-vehicle at the first end portion of the cargo deck of the roro-vehicle,
- a second end support structure that is adapted to be securely and disconnectably attached to the cargo deck of the roro-vehicle at the second end portion of the cargo deck of the roro-vehicle,
- an intermediate support structure that is adapted to be securely and disconnectably attached to an intermediate portion of the cargo deck of the roro-vehicle,
- a first intermediate upper deck that is adapted to be supported on and be securely and disconnectably attached to the first end support structure and the intermediate support structure, and
- a second intermediate upper deck that is adapted to be supported on and be securely and disconnectably attached to the second end support structure and the intermediate support structure,
and where the first support structure and the second support structure are capable of supporting a full-length upper deck loaded including cargo.

In this configuration of the cargo system, including two intermediate-length upper decks, the first support structure and the second support structure are also the same as for the full-length upper deck configuration of the cargo system and are therefore designed to be capable of supporting both the weight of the full-length upper deck and the weight of the cargo attached to the full-length upper deck and further to be capable of supporting the full-length configuration of the cargo system when it is subjected to external forces and loads due to motions of the vessel during transport.

It should be noted that the cargo system may of course be provided with more than one intermediate support structure arranged between the first end support structure and the second end support structure. If the cargo system is configured with, for example, two intermediate support structures, the cargo system may be provided with one, two or three intermediate upper decks, each preferably having the length of substantially one third the length of the cargo deck of the roro-vehicle on which the cargo system will be mounted.

The first end support structure preferably has a substantially rectangular cuboid shape. Thus, the first end support structure is provided with a substantially rectangular horizontal cross-section along the entire vertical length of the first end support structure. Consequently, the first end support structure preferably also has a substantially rectangular vertical cross-section along substantially the entire horizontal length of the first end support structure in the longitudinal direction of the cargo deck of the roro-vehicle, and a substantially rectangular vertical cross-section along substantially the entire horizontal length of the first end support structure in a transverse direction of the cargo deck of the roro-vehicle.

The first end support structure preferably comprises four substantially vertical corner bars that are arranged in the corners of the first end support structure, where the four substantially vertical corner bars at their lower ends are securely fastened to a rigid and rectangular lower frame and at their upper ends are securely fastened to a rigid and rectangular upper frame. The corner bars are preferably securely fastened in the corners of the rectangular lower and upper frames, for example by welding or with bolts, screws or any other suitable fastening means. With this configuration of the lower frame, the upper frame and the corner bars, the first end support structure will thereby have a rectangular cuboid form.

Preferably, the first end support structure further comprises at least one, but preferably a plurality of braces that are securely fastened to respective corner bars and/or bars that make up the lower frame or the upper frame. For example, at least one, but preferably a plurality of braces may be securely fastened to respective pairs of adjacent corner bars. Furthermore, a plurality of braces may be securely fastened to a corner bar and to a bar of the lower frame or the upper frame of the first end support structure. In addition, one or more braces may also be securely fastened to two opposite bars of the lower frame and/or the upper frame of the first end support structure.

The braces of the first end support structure preferably, but not necessarily, have the same cross-sectional shape and size as the four corner bars and/or the bars forming the lower and upper frames. The braces may be securely fastened to the corner bars and/or the bars forming the lower and upper frames, for example, by welding or with bolts, screws or any other suitable fastening means. The braces will contribute to the formation of a rigid and strong first end support structure that, together with the second end support structure, is capable of supporting a full-length upper deck, including cargo, also when the cargo system is subjected to additional large loads in bad weather when the vessel may undergo large motions due to large water waves in the sea.

The second end support structure preferably also has a substantially rectangular cuboid shape. Thus, the second end support structure is provided with a substantially rectangular horizontal cross-section along the entire vertical length of the first end support structure. Consequently, the second end support structure preferably also has a substantially rectangular vertical cross-section along substantially the entire horizontal length of the second end support structure in the longitudinal direction of the cargo deck of the roro-vehicle, and a substantially rectangular vertical cross-section along substantially the entire horizontal length of the second end support structure in a transverse direction of the cargo deck of the roro-vehicle.

The second end support structure preferably comprises four substantially vertical corner bars that are arranged in the corners of the substantially rectangular cross-section, where the four substantially vertical corner bars at their lower ends are securely fastened to a rigid and rectangular lower frame and at their upper ends are securely fastened to a rigid and rectangular upper frame. The corner bars are preferably securely fastened in the corners of the rectangular lower and upper frames, for example by welding or with bolts, screws or any other suitable fastening means. With this configuration of the lower frame, the upper frame and the corner bars, the second end support structure will have a rectangular cuboid form.

Preferably, the second end support structure further comprises at least one, but preferably a plurality of braces that are securely fastened to respective corner bars and/or bars that make up the lower frame or the upper frame. For example, at least one, but preferably a plurality of braces may be securely fastened to respective pairs of adjacent corner bars. Furthermore, a plurality of braces may be securely fastened to a corner bar and to a bar of the lower frame or the upper frame of the second end support structure. In addition, one or more braces may also be securely fastened to two opposite bars of the lower frame and/or the upper frame of the second end support structure.

The braces of the second end support structure preferably, but not necessarily, have the same cross-sectional shape and size as the four corner bars and/or the bars forming the lower and upper frames. The braces may be securely fastened to the corner bars and/or the bars forming the lower and upper frames, for example, by welding or with bolts, screws or any other suitable fastening means. The braces will contribute to the formation of a rigid and strong second end support structure that, as mentioned above, together with the first end support structure, is capable of supporting a full-length upper deck, including cargo, also when the cargo system is subjected to additional large loads in bad weather when the vessel may undergo large motions due to large water waves in the sea.

The first end support structure may further be provided with a first ladder for access to the upper deck. Likewise, the second end support structure may further be provided with a second ladder for access to the full-length upper deck or the at least one intermediate-length upper deck.

The first ladder of the first end support structure may form an integral part of the first end support structure. Likewise, the second ladder of the second end support structure form may form an integral part of the second end support structure

The first ladder may be provided with an extendable hand rail at the upper end thereof. Likewise, the second ladder may be provided with an extendable hand rail at the upper end thereof. The extendable hand rail of the first end support structure and/or the second end support structure will improve the safety of the personnel working on the upper deck. Since the hand rail of the first end support structure and/or the second end support structure preferably is/are extendable, the hand rail can be retracted during transport to avoid damage to the hand rail(s).

Preferably, but not necessarily, the first end support structure and the second end support structure are substantially identical, i.e. they have the same size and design so that each can be attached to any of the first end portion and the second end portion of the cargo deck of the roro-vehicle without compromising the capability of the first and second end structures to support a full-length upper deck packed to its limit with cargo.

Furthermore, a roro-vehicle for transport of cargo on a sea-going vessel is provided where the roro-vehicle comprises a cargo deck with a first end portion and a second end portion in a longitudinal direction of the roro-vehicle, and a cargo system as described above where the cargo system is securely and disconnectably attached to the cargo deck of the roro-vehicle.

Preferably, the cargo deck of the roro-vehicle, the first end support structure, the second end support structure, the intermediate support structure, the full-length upper deck and all intermediate-length upper decks are provided with the same type of locking mechanism for secure and disconnectable attachment of the first end support structure to the cargo deck and the full-length upper deck or the at least one intermediate-length upper deck to the first end support structure, secure and disconnectable attachment of the second end support structure to the cargo deck and the full-length upper deck or the at least one intermediate-length upper deck to the second end support structure and secure and disconnectable attachment of the first end support structure and/or the second end support structure to the cargo deck and the at least one intermediate-length upper deck to the first end support structure and/or the second end support structure. The locking mechanism may be a standard container twist lock or any other suitable locking mechanism.

Thus, the first end support structure, the cargo deck and the full-length upper deck or the at least one intermediate-length upper deck may be provided with container twist locks, or a plurality of any other suitable locking mechanism, for secure and disconnectable attachment of the first end support structure to the cargo deck and the full-length upper deck or the at least one intermediate-length upper deck to the first end support structure.

Furthermore, the second end support structure, the cargo deck and the full-length upper deck or the at least one intermediate-length upper deck are preferably provided with container twist locks, or a plurality of any other suitable locking mechanism, for secure and disconnectable attachment of the second end support structure to the cargo deck and the full-length upper deck or the at least one intermediate-length upper deck to the second end support structure.

Furthermore, the first end support structure and/or the second end support structure, the cargo deck and the at least one intermediate-length upper deck are preferably provided with container twist locks, or a plurality of any other suitable locking mechanism, for secure and disconnectable attachment of the first end support structure and/or the second end support structure to the cargo deck and the at least one intermediate-length upper deck to the first end support structure and/or the second end support structure.

The roro-vehicle preferably comprises at least one set of wheels such that the ro-ro vehicle can be moved across a surface. The roro-vehicle can be moved across a surface, such as a ground of a harbor, the deck of a vessel and the floor of a storage house where cargo is arranged on the cargo deck of the roro-vehicle and/or on the full-length upper deck or one or more intermediate-length upper decks.

The roro-vehicle preferably further comprises an attachment device such that the ro-ro vehicle can be disconnectably attached to a towing vehicle. The towing vehicle will tow the roro-vehicle from an onshore location to its desired location on a vessel for sea transport to a further destination where another towing vehicle will tow the roro-vehicle back onshore.

As mentioned, an advantage of the present cargo system and a roro-vehicle including the cargo system, is the possibility of adapting the configuration of the roro-vehicle to various shapes and sizes of the cargo items to be transported. A further advantage is the possibility to arrange cargo on the cargo deck of the roro-vehicle and on the upper deck or decks in separate places and at separate times.

Hence, there is provided a method for arranging cargo on a roro-vehicle as described herein, for transport of cargo on a sea-going vessel, by using a cargo system as described herein, where the method comprises the following steps:
- placing and securing cargo on the full-length upper deck or the at least one intermediate-length upper deck while the full-length upper deck or the at least one intermediate-length upper deck is arranged separate from the roro-vehicle,
- attaching the first end support structure to the first end portion of the cargo deck,
- attaching the second end support structure to the second end portion of the cargo deck and/or the intermediate support structure to an intermediate portion of the cargo deck,
- arranging the full-length upper deck on the first support structure and on the second end support structure, or arranging the at least one intermediate-length upper deck on the intermediate support structure and on the first end support structure and/or the second end support structure,
- attaching the full-length upper deck securely to the first support structure and to the second end support structure, or attaching the at least one intermediate-length upper deck to the intermediate support structure and to the first end support structure and/or the second end support structure

The cargo may be arranged and secured on the cargo deck before the full-length upper deck is arranged on the first end support structure and the second end support structure, or before the at least one intermediate-length upper deck is arranged on the intermediate support structure and the first end support structure and/or the second end support structure.

Optionally, cargo may be arranged and secured on the cargo deck and on the full-length upper deck or the at least one intermediate-length upper deck in separate locations. Furthermore, cargo may obviously be arranged and secured on the cargo deck and on the full-length upper deck or the at least one intermediate-length upper deck at separate times.

Other features and advantages of the invention will appear from the following description of preferred, non-limiting embodiments of the invention, with reference to the figures where:
Figure 1 illustrates a side view of a ro-ro vehicle according to the present invention with an upper deck that covers about half the area of the lower deck and which is supported by a first end support structure and an intermediate support structure.
Figure 2 illustrates a side view of a ro-ro vehicle according to the present invention with an upper deck that comprises a first upper deck and a second upper deck that together cover substantially the same area as the lower deck and which is supported by a first end support structure and an intermediate support structure and a second end support structure and an intermediate support structure.
Figure 3 illustrates a side view of the ro-ro vehicle according to the present invention with a first end support structure and a second end support structure only supporting a full-length upper deck that has substantially the same length and cargo area as the lower deck.
Figure 4 illustrates a top view of the ro-ro vehicle shown in figure 2.
Figure 5 illustrates a top view of the ro-ro vehicle shown in figure 3.
Figure 6 illustrates a rear view of the ro-ro vehicle configured with a second end support structure supporting an upper deck.
Figure 7a illustrates a front view of a first end support structure and/or a rear end support structure provided with a ladder that is part of the structure of the first end support structure and/or the rear end support structure and hand rails in an extended position.
Figure 7b illustrates a front view of the first end support structure and/or the rear end support structure shown in figure 7a with the hand rails in a retracted position.
Figure 7c illustrates a side view of the first end support structure and/or the rear end support structure shown in figure 7a and 7b with the hand rails in a retracted position.
Figure 7d illustrates a top view of a first end support structure and/or a rear end support structure shown in figure 7a-7c, but without ladder and hand rails.
Figure 8a illustrates a front view of an intermediate support structure for the upper deck.
Figure 8b illustrates a side view of the intermediate support structure for the upper deck shown in figure 8a.
Figure 8c illustrates a top view of the intermediate support structure for the upper deck shown in figures 8a and 8b.

It should be noted that the same reference number is used for the same feature in all figures.

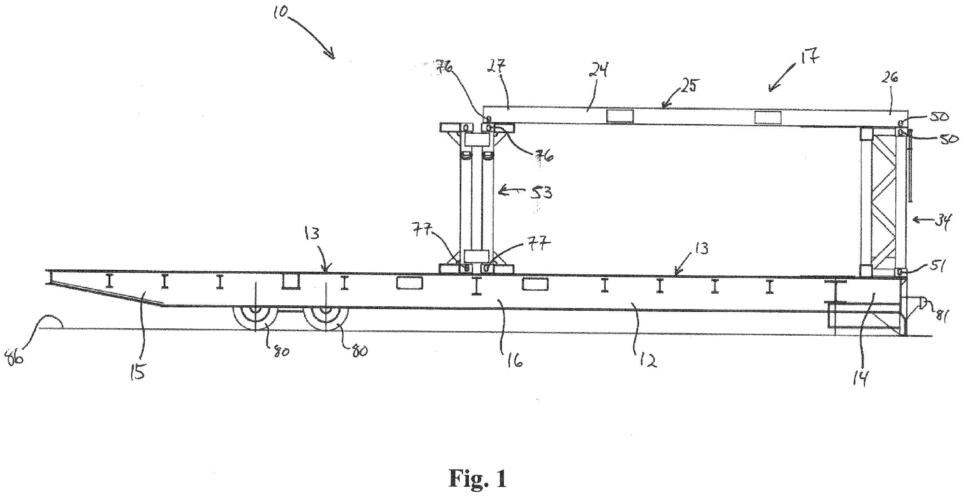

In figure 1 a standard roro-vehicle 10 and a cargo system 17 according to the present invention that is mounted on the roro-vehicle 10, is shown. The roro-vehicle 10 comprises a cargo deck 12. The cargo deck 12 is provided with a substantially flat and plane upper surface that forms the cargo area 13 of the cargo deck 12 on which cargo can be placed for transport with the roro-vessel 10. On such standard roro-vehicles cargo of various size and shape is arranged. Since cargo holds in cargo ships are provided with a standard height between the floor and the roof, any empty space above the cargo arranged on the cargo deck 12, and below the roof of the cargo hold, will remain unutilized.

The cargo deck 12 has a first end portion 14 at the end region of the cargo deck 12 near or adjacent to the front end of the roro-vehicle 10 and a second end portion 15 at the opposite end of the cargo deck 12. The roro-vehicle 10 is further provided with a plurality of wheels 80 and an attachment device 81 for attachment of the roro-vehicle 10 to a towing vehicle (not shown in the figures). When the roro-vehicle 10 is attached to a towing vehicle, the roro-vehicle can be moved across a surface 86 between desired locations onshore or on and off cargo ships, especially cargo ships that are designed to carry roro-vehicles with cargo. The roro-vehicle 10 travel with the cargo that is loaded on it to the destination of the cargo.

In order to improve the utilization of the space in the cargo holds, the present invention therefore provides a cargo system 17 that can be mounted on a standard roro-vehicle 10. The cargo system 17 comprises a number of elements that can be put together in various configurations such that the available space for cargo in cargo holds in cargo ship can be better utilized than is the case with today's standard roro-vehicles 10. As will be further explained below, the cargo system 17 is provided with at least two support structures 34, 36, 53 that are securely and releasably attached to the cargo deck 12 of the roro-vehicle. The at least two support structures 34, 36, 53 support one or more upper decks 18, 24, 29.

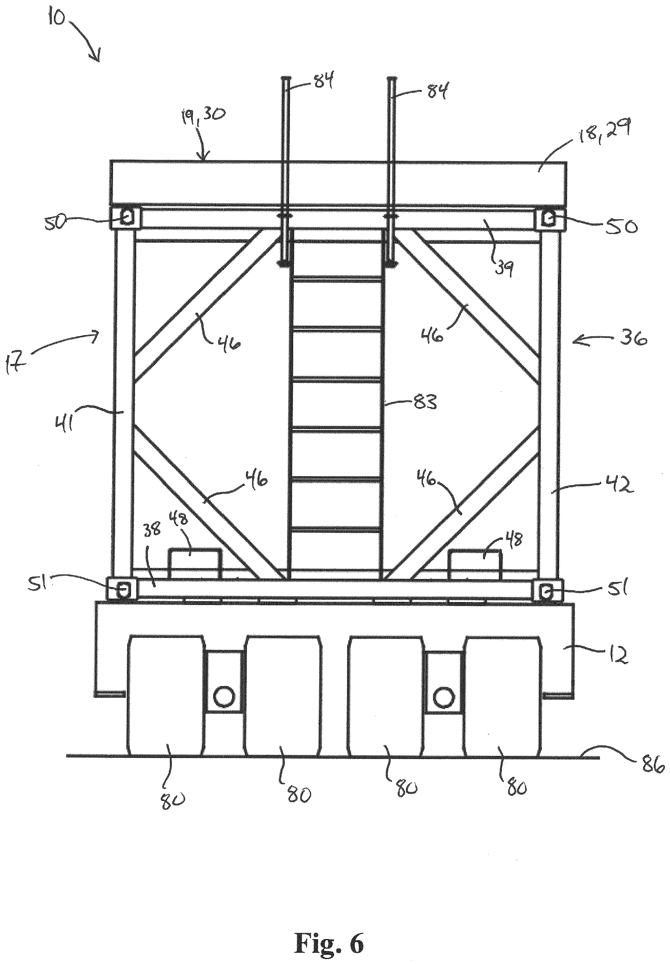

The cargo system 17 may comprise a first end support structure 34 as shown in figures 6 (mounted on a standard roro-vehicle 10) and 7a-d. The first end support structure 34 preferably, but not necessarily, has a substantially rectangular cuboid shape as indicated in the figures.

The first end support structure 34 is adapted to be securely attached to the first end portion 14 of the lower deck 12. For example, the roro-vehicle 10 and the lower deck 12 may be provided with at least one, but preferably two or more container twist locks 51 (see figures 6-7) or any other suitable locking device or devices that is capable of securely and releasably securing the first end support structure 34 to the lower deck 12. Container twist locks 50 may also be used to securely and releasably attach an upper deck 18, 24, 29 to the top of the first end support structure 34 as will be further explained below. Container twist locks 50, 51 are commonly used to lock standard containers to a surface, such as a container railway carriage or a container truck, and has now also been found to be suitable for releasable attachment of the first end support structure 34 to the cargo area 13 of the lower deck 12 of the roro-vehicle 10 and an upper deck 18, 24, 29 to the first end support structure 34.

The container twist locks 50, 51 comprises a first part mounted in or on the first end support structure 34 and a second part arranged in or on the lower deck 12 or the upper deck 18, 24, 29, or vice versa. Either the first part or the second part is designed with a twistable locking part that can be inserted into the other part and then twisted into a locking position which locks the first end support structure 34 to the lower deck 12 or the upper deck 18, 24, 29 to the top of the first end support structure 34. When the first end support structure 34 is attached to the lower deck 12, it is preferably resting on and supported by the cargo area 13 of the lower deck 12, i.e. the top surface of the roro-vehicle which is a substantially flat surface on which the cargo is placed. Such container twist locks as the container twist locks 50, 51 are well known in the art and will not be explained in any further detail herein. It should be noted that any desired number of container twist locks 50, 51 may be used to attach the first end support structure 34 to the lower deck 12 and the upper deck 18, 24, 29 to the top of the first end support structure 34.

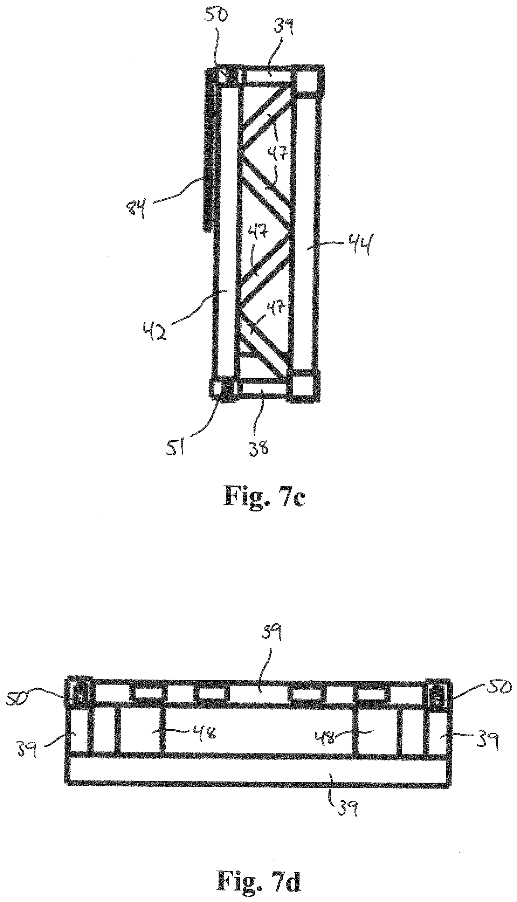

The first end support structure 34 is preferably made of a sturdy frame structure comprising a lower frame 38 and an upper frame 39. Preferably the frame structure of the first end support structure 34 forms a substantially rectangular cuboid shape as mentioned above. Thus, the lower frame 38 and the upper frame 39 preferably have the same shape, preferably a rectangular shape as indicated in figure 7d, where the upper frame 39 is shown. The lower and upper frames 38, 39 are typically made of steel profiles that are welded together. The steel profiles preferably have a rectangular or square cross-sectional shape but may obviously be given a cross-sectional shape that is different from rectangular and square.

The first end support structure 34 further comprises a four corner bars 40, 41, 42, 43 that are securely fastened to respective four corner of the lower frame 38 and the upper frame 39. The corner bars 40, 41, 42, 43 are preferably welded to the lower frame 38 and the upper frame 39, but may also be securely fastened by bolts, screws or any other suitable fastening means.

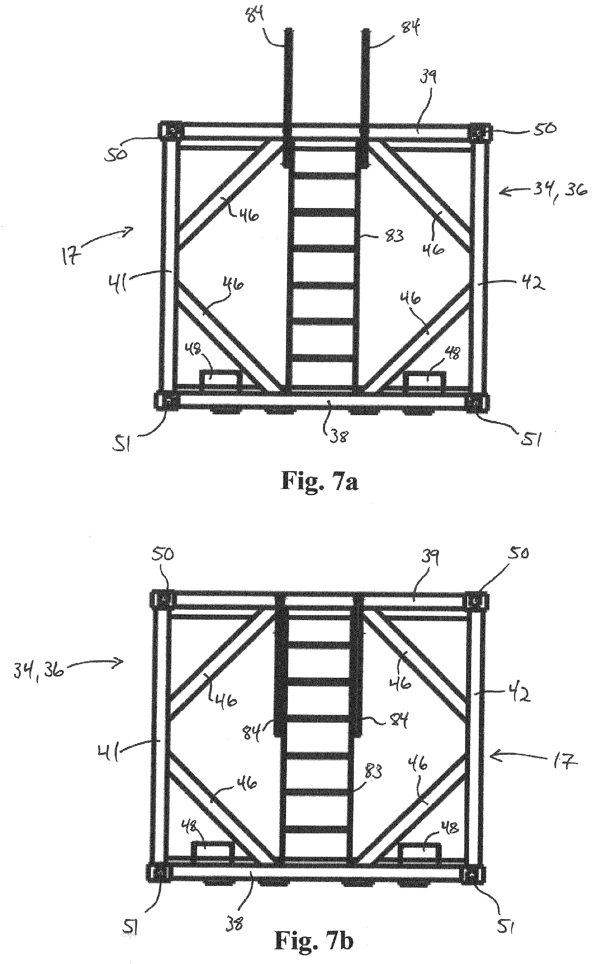

The first end support structure 34 is further preferably provided with a plurality of front braces 46, typically four front braces 46 and four rear braces 46 as indicated in figures 7a-7b. The front braces and rear braces are securely attached to respective corner bars 40, 41, 42, 43 and the lower frame 38 or the upper frame 39 as indicated in figures 7a-b. The front braces 46 and rear braces 46 are preferably securely attached to respective corner bars 40, 41, 42, 43 by welding, but any other suitable fastening means, such as bolts or screws, may be used.

Thus, a sturdy first end support structure 34 is obtained that is capable of supporting a full-length upper deck 18 with cargo arranged on it.

The first end support structure 34 is further preferably provided with a ladder 83 as shown in figures 6 and 7a-c. The ladder 83 is preferably securely attached to the first end support structure 34, for example by welding, bolts, screw or any other suitable fastening means. The ladder 83 can therefore be made to contribute additional strength and stiffness to the first end support structure 34.

The ladder 83 is preferably provided with one or more handrails 84 that are extendable between a lower position as shown in figure 7b and 7c, and an upper position as shown in figures 6 and 7a which facilitates access for personnel to the upper deck 18, 24, 29.

The lower frame 38 of the first end support structure 34 is preferably provided with a part of at least one, but preferably a plurality of lower container twist locks 51 as explained above and indicated in figures 6 and 7a-c. A corresponding part of the lower container twist lock 51 is arranged in the cargo area 13 of the roro-vehicle 10 at the first end portion 14 of the cargo area 13 so that the first end support structure 34 can be securely and releasably attached to the cargo area 13 of the cargo deck 12 of the roro-vehicle 10.

Similarly, the upper frame 39 of the first end support structure 34 is preferably provided with a part of at least one, but preferably a plurality of upper container twist locks 50 as explained above and indicated in figures 6 and 7a-d. A corresponding part of the upper container twist lock 50 is arranged in an upper deck 18, 24, 29 of the cargo system 17 at the first end portion 20, 26, 31 of the upper deck so that the upper deck 18, 24, 29 can be securely and releasably attached to the upper frame 50 of the first end support structure 34.

The cargo system 17 may comprise a second end support structure 36 as shown in figures 6 (mounted on a standard roro-vehicle 10) and 7a-d. The second end support structure 36 preferably, but not necessarily, has a substantially rectangular cuboid shape as indicated in the figures.

The second end support structure 36 is adapted to be securely attached to the second end portion 15 of the lower deck 12. For example, the roro-vehicle 10 and the lower deck 12 may be provided with at least one, but preferably two or more container twist locks 51 (see figures 6-7) or any other suitable locking device or devices that is capable of securely and releasably securing the second end support structure 36 to the lower deck 12. Container twist locks 50 may also be used to securely and releasably attach an upper deck 18, 24, 29 to the top of the second end support structure 36 as will be further explained below. Container twist locks 50, 51 are commonly used to lock standard containers to a surface, such as a container railway carriage or a container truck, and has now also been found to be suitable for releasable attachment of the second end support structure 36 to the cargo area 13 of the lower deck 12 of the roro-vehicle 10 and an upper deck 18, 24, 29 to the second end support structure 36.

The container twist locks 50, 51 comprises a first part mounted in or on the second end support structure 36 and a second part arranged in or on the lower deck 12 or the upper deck 18, 24, 29, or vice versa. Either the first part or the second part is designed with a twistable locking part that can be inserted into the other part and then twisted into a locking position which locks the second end support structure 36 to the lower deck 12 or the upper deck 18, 24, 29 to the top of the second end support structure 36. When the second end support structure 36 is attached to the lower deck 12, it is preferably resting on and supported by the cargo area 13 of the lower deck 12, i.e. the top surface of the roro-vehicle which is a substantially flat surface on which the cargo is placed. As mentioned, such container twist locks as the container twist locks 50, 51 are well known in the art and will not be explained in any further detail herein. It should be noted that any desired number of container twist locks 50, 51 may be used to attach the second end support structure 36 to the lower deck 12 and the upper deck 18, 24, 29 to the top of the second end support structure 36.

The second end support structure 36 is preferably, but not necessarily, substantially identical to the first end support structure 34. An advantage of making the first end support structure 34 and the second end support structure 35 substantially identical is that there is need for only one type of end support structure 34, 36 that can be attached to both the first end portion 14 and the second end portion 15 of the cargo area 13 of the cargo deck 12 of the roro-vehicle 10.

Thus, the second end support structure 36 is preferably made of a sturdy frame structure comprising a lower frame 38 and an upper frame 39. Preferably the frame structure of the second end support structure 36 forms a substantially rectangular cuboid shape as mentioned above. Thus, the lower frame 38 and the upper frame 39 preferably have the same shape, preferably a rectangular shape as indicated in figure 7d, where the upper frame 39 is shown. The lower and upper frames 38, 39 are typically made of steel profiles that are welded together. The steel profiles preferably have a rectangular or square cross-sectional shape but may obviously be given a cross-sectional shape that is different from rectangular and square.

The second end support structure 36 further comprises a four corner bars 40, 41, 42, 43 that are securely fastened to respective four corner of the lower frame 38 and the upper frame 39. The corner bars 40, 41, 42, 43 are preferably welded to the lower frame 38 and the upper frame 39, but may also be securely fastened by bolts, screws or any other suitable fastening means.

The second end support structure 36 is further preferably provided with a plurality of front braces 46, typically four front braces 46 and four rear braces 46 as indicated in figures 7a-7b. The front braces and rear braces are securely attached to respective corner bars 40, 41, 42, 43 and the lower frame 38 or the upper frame 39 as indicated in figures 7a-b. The front braces 46 and rear braces 46 are preferably securely attached to respective corner bars 40, 41, 42, 43 by welding, but any other suitable fastening means, such as bolts or screws, may be used.

Thus, a sturdy second end support structure 36 is obtained that is capable of supporting a full-length upper deck 18 with cargo arranged on it.

The second end support structure 36 may further be provided with a ladder 83 as shown in figures 6 and 7a-c. The ladder 83 is preferably securely attached to the second end support structure 36, for example by welding, bolts, screw or any other suitable fastening means. The ladder 83 can therefore be made to contribute additional strength and stiffness to the second end support structure 36.

The ladder 83 is preferably provided with one or more handrails 84 that are extendable between a lower position as shown in figure 7b and 7c, and an upper position as shown in figures 6 and 7a which facilitates access for personnel to the upper deck 18, 24, 29.

The lower frame 38 of the second end support structure 36 is preferably provided with a part of at least one, but preferably a plurality of lower container twist locks 51 as explained above and indicated in figures 6 and 7a-c. A corresponding part of the container twist lock 51 is arranged in the cargo area 13 of the roro-vehicle 10 at the first end portion 14 of the cargo area 13 so that the second end support structure 36 can be securely and releasably attached to the cargo area 13 of the cargo deck 12 of the roro-vehicle 10.

Similarly, the upper frame 39 of the second end support structure 36 is preferably provided with a part of at least one, but preferably a plurality of upper container twist locks 50 as explained above and indicated in figures 6 and 7a-d. A corresponding part of the upper container twist lock 50 is arranged in an upper deck 18, 24, 29 of the cargo system 17 at the first end portion 20, 26, 31 of the upper deck so that the upper deck 18, 24, 29 can be securely and releasably attached to the upper frame 50 of the second end support structure 36.

The cargo system 17 may be provided with at least one intermediate support structure 53 as shown clearly in figures 1-2 and 4. It should be noted, however, that the cargo system may be provided with two or more intermediate support structures arranged to be securely and releasably attached to the cargo deck 12 of the roro-vehicle 10, between the first end portion 14 and the second end portion 15 of the cargo area 13 or the cargo deck 12. The intermediate support structure 53 is used if the cargo system 17 is provided with one or more intermediate upper decks 24, 29.

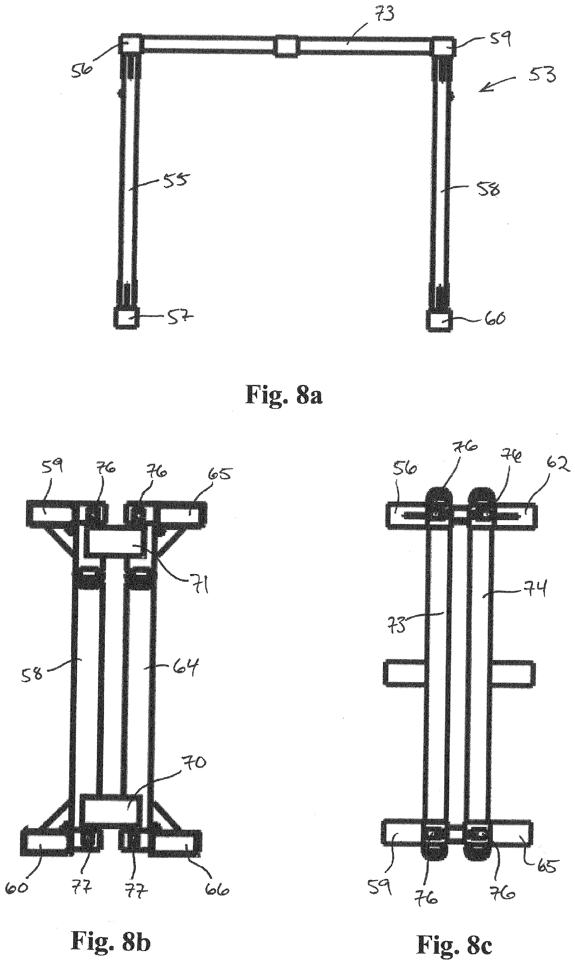

As shown in figures 8a-c, the intermediate support structure 53 may be made of a front vertical bar 55 and a rear vertical bar 61 arranged on one lateral side of the intermediate support structure 53 and a front vertical bar 58 and a rear vertical bar 64 arranged on the other lateral side of the intermediate support structure 53.

The front vertical bar 55 and the rear vertical bar 61 are attached to respective lower foot elements 57, 63 at the lower ends, for example by welding, bolts, screws or any other suitable fastening means, and to respective upper foot elements 56, 62 at the upper ends, for example by welding, bolts, screws or any other suitable fastening means.

On the other lateral side of the intermediate support structure 53, the front vertical bar 58 and the rear vertical bar 64 are attached to respective lower foot elements 60, 66 at the lower ends, for example by welding, bolts, screws or any other suitable fastening means, and to respective upper foot elements 59, 65 at the upper ends, for example by welding, bolts, screws or any other suitable fastening means.

The front vertical bar 55 and the rear vertical bar 61 are preferably securely attached to each other with a lower connecting element 70 and an upper connecting element 71, for example by welding, bolts, screws or any other suitable fastening means. Similarly, the front vertical bar 58 and the rear vertical bar 64 are preferably securely attached to each other with a lower connecting element 70 and an upper connecting element 71, for example by welding, bolts, screws or any other suitable fastening means.

On top of the two front vertical bars 55, 58 there is arranged a front cross bar 73 that is securely attached to the two front vertical bars 55, 58, for example by welding, bolts, screws or any other suitable fastening means. Similarly, on top of the two rear vertical bars 61, 64 there is arranged a rear cross bar 74 that is securely attached to the two rear vertical bars 61, 64, for example by welding, bolts, screws or any other suitable fastening means.

Thus, a sturdy intermediate support structure 53 is obtained that is capable of supporting one or two intermediate-length upper decks 24, 29 with cargo arranged on it/them.

The intermediate support structure 53 is preferably provided with a part of at least one, but preferably a plurality of lower container twist locks 77 of the same type as explained above and indicated in figure 8b. A corresponding part of the lower container twist locks 77 are arranged in the cargo area 13 of the roro-vehicle 10 between the first end portion 14 and the second end portion 15 of the cargo area 13 so that the intermediate support structure 53 can be securely and releasably attached to the cargo area 13 of the cargo deck 12 of the roro-vehicle 10.

Similarly, the intermediate support structure 53 is preferably provided with a part of at least one, but preferably a plurality of upper container twist locks 76 of the same type as explained above and indicated in figures 8b-c. A corresponding part of the upper container twist locks 76 are arranged in an intermediate upper deck 24, 29 of the cargo system 17 at the first end portion 26, 31 and/or a second end portion 27, 32 of the intermediate upper deck so that the intermediate upper deck or decks 24, 29 can be securely and releasably attached to the intermediate support structure 53. In figures 1-5 there is shown various configurations of the cargo system 17 according to the present invention where the cargo system is securely and releasably mounted to the cargo deck 12 of a roro-vehicle 10.

In figure 1 there is shown a configuration of the cargo system 17 comprising a first end support structure 34 that is securely attached to the cargo area 13 of the cargo deck 12 of the roro-vehicle 10 with at least one, but preferably two or more container twist locks 51. The cargo system 17 shown in figure 1 further comprises an intermediate support structure 53 that is securely and releasably attached to the cargo area 13 of the cargo deck 12 of the roro-vehicle 10, between the first end portion 14 and the second end portion 15 of the cargo deck 12, with at least one, but preferably two or more lower container twist locks 77.

The cargo system 17 shown in figure 1 further comprises a first intermediate-length upper deck 24, with a cargo area 25, that is securely and releasably attached to the first end support structure 34 at the first end portion 26 of the first intermediate-length upper deck 24, with at least one, but preferably two or more upper container twist locks 50, and to the intermediate support structure 53 at the second end portion 27 of the first intermediate-length upper deck 24, with at least one, but preferably two or more upper container twist locks 76.

With this configuration of the cargo system 17, smaller cargo with lower height that fits between the cargo area 13 of the cargo deck 12 and the first intermediate upper deck 24 can be arranged on two floors, i.e. on the front half of the cargo deck 12 and the first intermediate-length upper deck 24, while larger cargo with a height exceeding the height between the cargo area 13 and the first intermediate-length upper deck 24, can be arranged within the rear half of the cargo area 13 of the cargo deck 12.

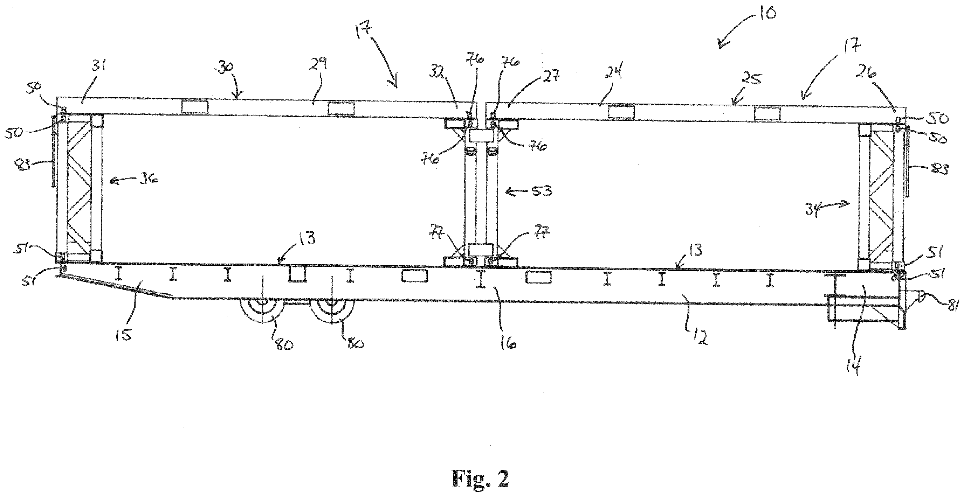

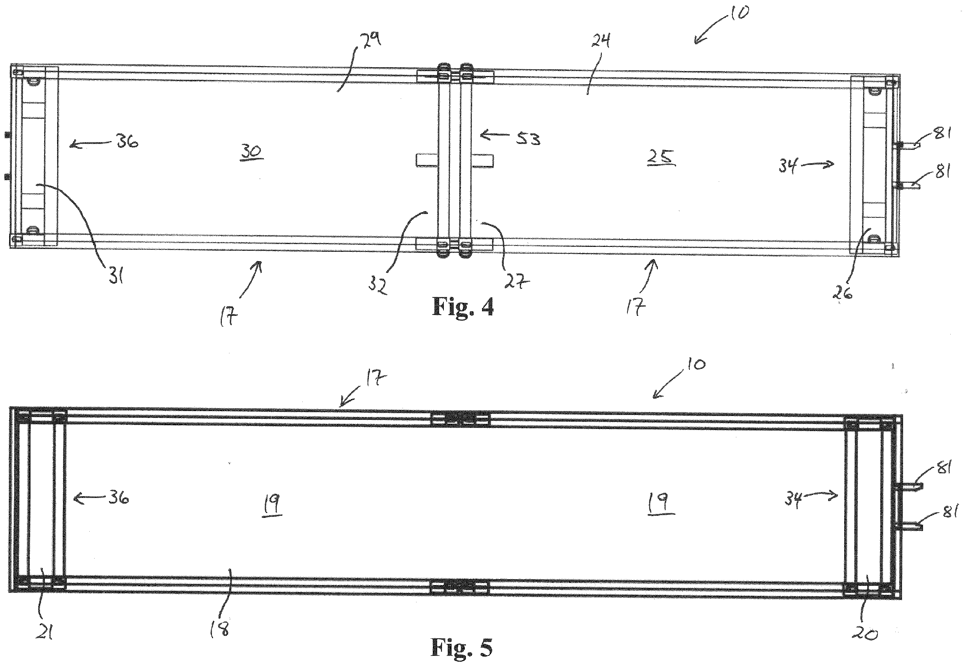

In figures 2 and 4 there is shown a configuration of the cargo system 17 comprising a first end support structure 34 that is securely attached to the cargo area 13 of the cargo deck 12 of the roro-vehicle 10 with at least one, but preferably two or more lower container twist locks 51. The cargo system 17 further comprises a second end support structure 36 that is securely attached to the cargo area 13 of the cargo deck 12 of the roro-vehicle 10 with at least one, but preferably two or more lower container twist locks 51. As mentioned above, the first end support structure 34 and the second end support structure may have a substantially identical design.

The cargo system 17 in figures 2 and 4 further comprises an intermediate support structure 53 that is securely and releasably attached to the cargo area 13 of the cargo deck 12 of the roro-vehicle 10, between the first end portion 14 and the second end portion 15 of the cargo deck 12, i.e. between the first end support structure 34 and the second end support structure 36, with at least one, but preferably two or more lower container twist locks 77.

The cargo system 17 in figures 2 and 4 further comprises a first intermediate-length upper deck 24, with a cargo area 25, that is securely and releasably attached to the first end support structure 34 at the first end portion 26 of the first intermediate-length upper deck 24, with at least one, but preferably two or more upper container twist locks 50, and to the intermediate support structure 53 at the second end portion 27 of the first intermediate-length upper deck 24, with at least one, but preferably two or more upper container twist locks 76.

The cargo system 17 in figures 2 and 4 further comprises a second intermediate-length upper deck 29, with a cargo area 30, that is securely and releasably attached to the second end support structure 36 at the first end portion 31 of the second intermediate-length upper deck 29, with at least one, but preferably two or more upper container twist locks 50, and to the intermediate support structure 53 at the second end portion 32 of the second intermediate-length upper deck 29, with at least one, but preferably two or more upper container twist locks 76.

With this configuration of the cargo system 17, smaller cargo with lower height that fits between the cargo area 13 of the cargo deck 12 and the first intermediate upper deck 24 can be arranged on two floors along the entire height of the cargo deck 12.

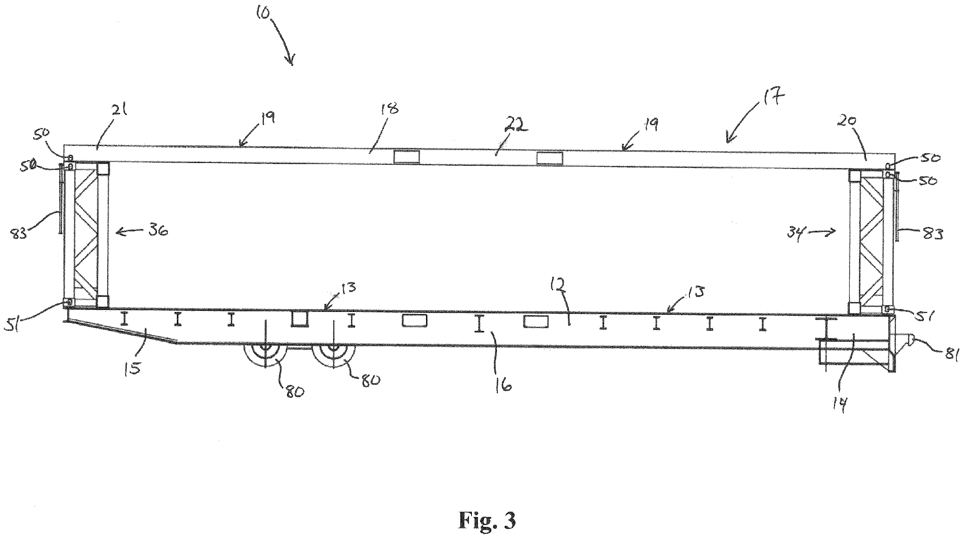

In figures 3 and 5 there is shown a configuration of the cargo system 17 comprising a first end support structure 34 that is securely attached to the cargo area 13 of the cargo deck 12 of the roro-vehicle 10 with at least one, but preferably two or more lower container twist locks 51. The cargo system 17 further comprises a second end support structure 36 that is securely attached to the cargo area 13 of the cargo deck 12 of the roro-vehicle 10 with at least one, but preferably two or more lower container twist locks 51. As mentioned above, the first end support structure 34 and the second end support structure may have a substantially identical design.

The cargo system 17 in figures 2 and 4 further comprises a full-length upper deck 18, with a cargo area 19, that is securely and releasably attached to the first end support structure 34 at the first end portion 20 of the full-length upper deck 18, with at least one, but preferably two or more upper container twist locks 50, and to the second end support structure 36 at the second end portion 21 of the full-length upper deck 18, with at least one, but preferably two or more upper container twist locks 50.

As with the configuration with two intermediate-length upper decks 24, 29, with this configuration of the cargo system 17, smaller cargo with lower height that fits between the cargo area 13 of the cargo deck 12 and the first intermediate upper deck 24 can be arranged on two floors along the entire height of the cargo deck 12.

The cargo system 17 that is explained above and shown in the figures is very flexible compared to known solutions. The sturdy first and second end support structures 34, 36 that are capable of supporting a full-length upper deck 18 with cargo, allows cargo to be stowed in two or even three or more floors (not shown in the figures), thereby enabling a much better utilization of the accessible space in the cargo holds in cargo ships. In addition, the present cargo system 17 is very flexible since cargo can be arranged on the cargo deck 13 of the roro-vehicle 10 and one or more of the upper decks 18, 24, 29 at different locations and/or at different times. Furthermore, as the cargo ship sails from port to port, the one or more of the upper decks 18, 24, 29 may be left at one port and another upper deck that has been loaded with cargo in advance, can be arranged on the roro-vehicle 10. Since the roro-vehicle 10 can easily be moved between the cargo ship and a location onshore, all loading operations can take place onshore and no loading and/or unloading of cargo of the roro-vehicle needs to take place onboard the cargo ship.

It should also be mentioned that although there is only shown configurations of the cargo system 17 with one intermediate support structure 53 arranged between the first end support structure 34 and the second end support structure 36, two or more intermediate support structures 53 may be arranged between the first and second end support structures 34, 36 with intermediate upper decks having suitable lengths in the longitudinal direction of the roro-vehicle to fit between the supports. If the cargo system 17 is configured with, for example, two intermediate support structures 53, the cargo system 17 may be provided with one, two or three intermediate-length upper decks, where each intermediate-length upper deck may have the length of one third the length of the cargo deck 12 of the roro-vehicle 10 on which the cargo system 17 is mounted or, alternatively, for example one or two intermediate-length upper decks each having a length of one quarter of the length of the cargo deck 12 and one intermediate-length upper deck having a length of half the length of the cargo deck 12. Many other configurations of the cargo system 17 are obviously possible.

The invention has now been explained with reference to a non-limiting example. It should be mentioned that all the above-mentioned embodiments only illustrate the invention. Therefore, a person skilled in the art will be able to contemplate many alternative embodiments without deviating from the scope of the enclosed claims. In the claims, reference numbers in brackets shall not be construed as limiting.

It should also be mentioned that the use of the verb "to comprise" herein and its different forms do not exclude the presence of elements or steps which are not mentioned in the claims. The article "a" before an element do not exclude the presence of several such elements.

## Claims

1. A cargo system (17) for a roro-vehicle (10) for transport of cargo on a sea-going vessel where the roro-vehicle (10) comprises a cargo deck (12) with a first end portion (14) and a second end portion (15) in a longitudinal direction of the roro-vehicle (10), the cargo system (17) comprising:
- a first end support structure (34) that is adapted to be securely and disconnectably attached to the cargo deck (12) of the roro-vehicle (10) at the first end portion (14) of the cargo deck (12),
- a second end support structure (36) that is adapted to be securely and disconnectably attached to the cargo deck (12) of the roro-vehicle (10) at the second end portion (15), and/or an intermediate support structure (53) that is adapted to be securely and disconnectably attached to an intermediate portion (16) of the cargo deck (12) of the roro-vehicle (10),
- either a full-length upper deck (18) where the full-length upper deck (18) is supported on and adapted to be securely and disconnectably attached to the first end support structure (34) and the second end support structure (36), or at least one intermediate-length upper deck (24, 29) that is adapted to be supported on and be securely and disconnectably attached to the intermediate support structure (53) and to the first end support structure (34) and/or the second end support structure (36),
wherein the first end support structure (34) and the second end support structure (36) are capable of supporting the full-length upper deck (18) loaded with cargo.

2. A cargo system according to claim 1,
wherein the first end support structure (34) has a substantially rectangular cuboid shape with a rectangular horizontal cross-section along the entire vertical length of the first end support structure (34).

3. A cargo system according to claim 2,
wherein the first end support structure (34) comprises four substantially vertical corner bars (41, 42, 43, 44) that are arranged in the corners of the first end support structure (34), where the four substantially vertical corner bars (41, 42, 43, 44) at their lower ends are securely fastened to a rigid and rectangular lower frame (38) and at their upper ends are securely fastened to a rigid and rectangular upper frame (39).

4. A cargo system according to claim 3,
wherein a plurality of braces (47) are securely fastened to respective pairs of adjacent corner bars (41, 42, 43, 44).

5. A cargo system according to one of the claims 1-4,
wherein the second end support structure has a substantially rectangular cuboid shape with a rectangular horizontal cross-section along the entire vertical length of the first end support structure.

6. A cargo system according to claim 5,
wherein the second end support structure comprises four substantially vertical corner bars that are arranged in the corners of the substantially rectangular cross-section, where the four substantially vertical corner bars at their lower ends are securely fastened to a rigid and rectangular lower frame and at their upper ends are securely fastened to a rigid and rectangular upper frame.

7. A cargo system according to claim 6,
wherein a plurality of braces are securely fastened to respective pairs of adjacent corner bars.

8. A cargo system according to one of the claims 1-7,
wherein the first end support structure is provided with a first ladder for access to the upper deck and/or the second end support structure is provided with a second ladder for access to the full-length upper deck or the at least one intermediate-length upper deck.

9. A roro-vehicle for transport of cargo on a sea-going vessel, the roro-vehicle comprising a cargo deck with a first end portion and a second end portion in a longitudinal direction of the roro-vehicle and a cargo system according to any one of the claims 1-9 which is securely and disconnectably attached to the cargo deck of the roro-vehicle.

10. A roro-vehicle according to claim 9,
wherein the first end support structure, the cargo deck and the full-length upper deck or the at least one intermediate-length upper deck are provided with container twist locks for secure and disconnectable attachment of the first end support structure to the cargo deck and the full-length upper deck or the at least one intermediate-length upper deck to the first end support structure.

11. A roro-vehicle according to claim 9,
wherein the second end support structure, the cargo deck and the full-length upper deck or the at least one intermediate-length upper deck are provided with container twist locks for secure and disconnectable attachment of the second end support structure to the cargo deck and the full-length upper deck or the at least one intermediate-length upper deck to the second end support structure.

12. A roro-vehicle according to claim 9,
wherein the first end support structure and/or the second end support structure, the cargo deck and the at least one intermediate-length upper deck are provided with container twist locks for secure and disconnectable attachment of the first end support structure and/or the second end support structure to the cargo deck and the at least one intermediate-length upper deck to the first end support structure and/or the second end support structure.

13. A method for arranging cargo on a roro-vehicle according to any one of claims 9-12 for transport of cargo on a sea-going vessel using a cargo system according to any one of claims 1-8, the method comprising the following steps:
- placing and securing cargo on the full-length upper deck or the at least one intermediate-length upper deck while the full-length upper deck or the at least one intermediate-length upper deck is arranged separate from the roro-vehicle,
- attaching the first end support structure to the first end portion of the cargo deck,
- attaching the second end support structure to the second end portion of the cargo deck and/or the intermediate support structure to an intermediate portion of the cargo deck,
- arranging the full-length upper deck on the first support structure and on the second end support structure, or arranging the at least one intermediate-length upper deck on the intermediate support structure and on the first end support structure and/or the second end support structure,
- attaching the full-length upper deck securely to the first support structure and to the second end support structure, or attaching the at least one intermediate-length upper deck to the intermediate support structure and to the first end support structure and/or the second end support structure.

14. The method according to claim 13,
wherein the method further comprises the step of placing and securing cargo on the cargo deck before the full-length upper deck is arranged on the first end support structure and the second end support structure, or before the at least one intermediate-length upper deck is arranged on the intermediate support structure and the first end support structure and/or the second end support structure.

15. The method according to claim 13 or 14,
wherein cargo is placed and secured on the cargo deck and on the full-length upper deck or the at least one intermediate-length upper deck in separate locations.
